(19) Europäisches Patentamt
European Patent Office
Office européen des brevets

(11) Veröffentlichungsnummer: **0 360 076 A2**

(12) # EUROPÄISCHE PATENTANMELDUNG

(21) Anmeldenummer: 89116495.6

(51) Int. Cl.5: C08G 64/18

(22) Anmeldetag: 07.09.89

(30) Priorität: 20.09.88 DE 3831887

(43) Veröffentlichungstag der Anmeldung: 28.03.90 Patentblatt 90/13

(84) Benannte Vertragsstaaten: DE FR GB IT NL

(71) Anmelder: BAYER AG

D-5090 Leverkusen 1 Bayerwerk(DE)

(72) Erfinder: Leitz, Edgar, Dr.
Goethestrasse 63
D-4047 Dormagen 1(DE)
Erfinder: Ott, Karl-Heinz, Dr.
Paul-Klee-Strasse 54
D-5090 Leverkusen 1(DE)
Erfinder: Jung, Alfred, Dr.
Bodelschwinghstrasse 12
D-4150 Krefeld 1(DE)
Erfinder: Grigo, Ulrich, Dr.
Michelsheide 9
D-4152 Kempen 3(DE)
Erfinder: Buysch, Hans-Josef, Dr.
Brandenburger Strasse 28
D-4150 Krefeld 1(DE)
Erfinder: Schön, Norbert, Dr.
Wilhelmshofallee 82
D-4150 Krefeld 1(DE)

(54) **Blockcopolymerisate auf der Basis von cyclischen aliphatischen Carbonaten und/oder Estern einerseits und cyclischen aromatischen Carbonaten andererseits.**

(57) Copolymerisate aus Blöcken von Polymeren cyclischer aliphatischer Carbonate, cyclischer aliphatischer Ester oder cyclischer aliphatischer Carbonate und cyclischer aliphatischer Ester einerseits sowie Blöcken von Polymeren cyclischer aromatischer Carbonate andererseits sowie ein Verfahren zu ihrer Herstellung durch mehrstufige Polymerisation, in der zuerst ein Blockpolymer aus dem aliphatischen Monomeren hergestellt wird und in Gegenwart dieses Blocks das aromatische Polymer erzeugt wird.

EP 0 360 076 A2

# Blockcopolymerisate auf der Basis von cyclischen aliphatischen Carbonaten und/oder Estern einerseits und cyclischen aromatischen Carbonaten andererseits

Gegenstand der Erfindung sind Copolymere aus Blöcken von Polymeren cyclischer aliphatischer Carbonate, cyclischer aliphatischer Ester oder cyclischer aliphatischer Carbonate und cyclischer aliphatischer Ester einerseits und Blöcken von Polymeren cyclischer aromatischer Carbonate andererseits. Die Blockcopolymeren können durch die idealisierte Formel

A - C (I)

beschrieben werden, wobei
A den aliphatischen und
C den aromatischen Polymerblock
darstellt.

Der Block A ist insbesondere
$A_1$ ein Polymer eines oder mehrerer cyclischer aliphatischer Carbonate.
$A_2$ ein Polymer eines cyclischen aliphatischen Esters,
$A_3$ ein Blockcopolymer aus Blöcken $A_1$ und $A_2$.

Aufbau der Blöcke A:

Die Blöcke $A_1$ sind Polymere von cyclischen aliphatischen Carbonaten der Formel (III)

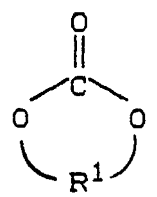

(III)

und/oder der Formel (IV)

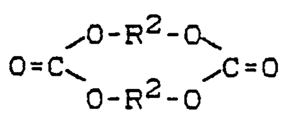

(IV).

Die Blöcke $A_2$ sind Polymere cyclischer aliphatischer Ester der Formel (V)

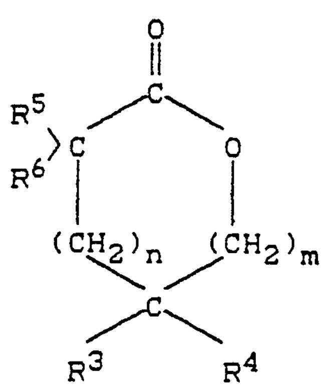

(V).

Die Blöcke $A_3$ enthalten sowohl Verbindungen der Formeln (III) und/oder (IV) als auch solche der Formel (V) in polymerisierter Form.

Aufbau der Blöcke C:

C in der Formel (I) ist ein Polymeres aus cyclischen aromatischen Carbonatoligomeren der Formel (VI)

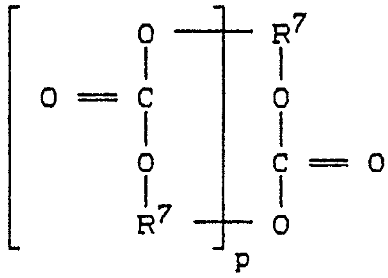

(VI).

In den Formeln haben die allgemeinen Bezeichnungen folgende Bedeutungen:
$R^1$ in Formel (III)

a) $-CH_2CH_2CH(CH_3)-$

b) $-CH_2CH_2OCH_2CH_2OCH_2CH_2-$

c) $-CH_2CH(CH_3)CH_2CH_2C(CH_3)_2CH_2-$

d) 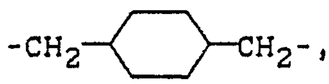

e) 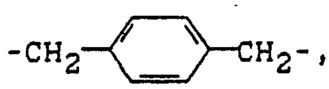

f) 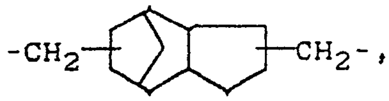

g) 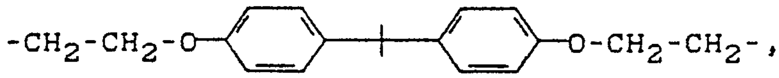

h) 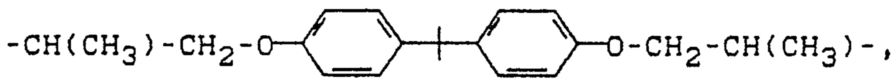

i) 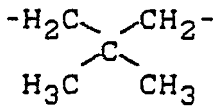 ,

j) 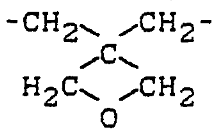 ,

k) 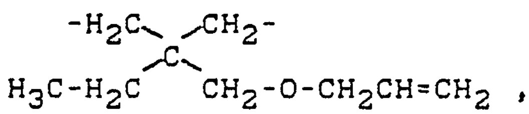

l) 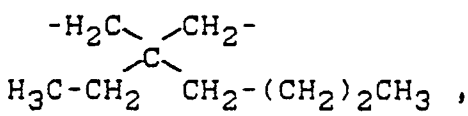

m) $-(-CH_2-)_{3\ \text{bis}\ 10}$ ,

$R^2$ in Formal (IV)

a) $-(-CH_2-)_{\overline{4}\ \text{bis}\ 12}$ ,

b) $CH_2CH_2OCH_2CH_2$-

c) $-CH_2CH_2OCH_2CH_2OCH_2CH_2-$.

$R^3$, $R^4$, $R^5$ und $R^6$ in Formel (V) unabhängig voneinander Wasserstoff, $C_1$-$C_6$-Alkyl, $C_3$-$C_6$-Alkylen, $C_1$-$C_6$-Alkoxy und $C_2$-$C_6$-Alkylenoxy-$C_1$-$C_6$-alkyl (vorzugsweise Wasserstoff, $CH_3$, $C_2H_5$)

m und n in Formel (V) unabhängig voneinander O oder eine ganze Zahl von 1 bis 6.

p in Formel (VI) ist eine ganze Zahl von 1 bis 30 (bevorzugt 1 bis 20, besonders bevorzugt 1 bis 12),

$R^7$ in Formel (VI) Rest eines Diphenols der Formel (VII);

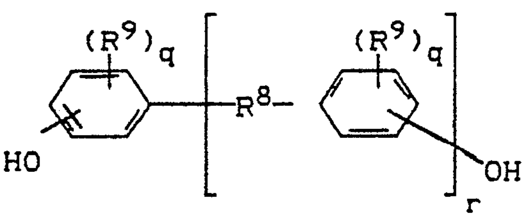

(VII).

$R^8$ in Formel (VII) eine Einfachbindung, $C_1$-$C_5$-Alkylen, $C_2$-$C_5$-Alkyliden, $C_5$-$C_6$-Cycloalkyliden, -O-, -SO-, -S-, -$SO_2$-, -CO- oder

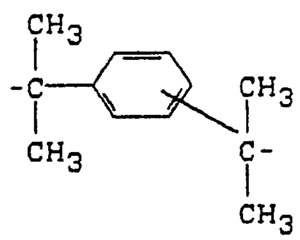

(VIIa).

$R^9$ in Formel (VII) ist Chlor, Brom oder Methyl,
q in Formel (VII) ist 0, 1 oder 2 und
r in Formel (VII) ist 1 oder 0.

Die Verbindungen der Formeln III bis VII und ihre Herstellung sind bekannt.

Geeignete Diphenole der Formel (VII) sind:
Hydrochinon,
Resorcin,
Dihydroxyphenyle,
Bis-(hydroxyphenyl)-$C_1$-$C_5$-alkane
Bis-(hydroxyphenyl)-$C_1$-$C_6$-cycloalkane,
Bis-(hydroxyphenyl)-ether,
Bis-(hydroxyphenyl)-sulfoxide,
Bis-(hydroxyphenyl)-ketone,
Bis-(hydroxyphenyl)-sulfide,
Bis-(hydroxyphenyl)-sulfone und
$\alpha,\alpha'$-Bis-(hydroxyphenyl)-diisopropylbenzole
sowie deren kernchlorierte, kernbromierte oder kernmethylierte Derivate.

Bevorzugte Diphenole der Formel (VII) sind 2,2-Bis-(4-hydroxyphenyl)-propan, 2,2-Bis-(3,5-dimethyl-4-hydroxyphenyl)-propan, 2,4-Bis-(4-hydroxyphenyl)-2-methylbutan, 1,1-Bis-(4-hydroxyphenyl)-cyclohexan, 4,4-Dihydroxyphenylsulfide, 4,4-Dihydroxyphenylsulfon sowie deren di-und tertrabromierte oder chlorierte Derivate wie 2,2-Bis-(3-chloro-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugtes Diphenol ist 2,2-Bis-(4-hydroxyphenyl)-propan.

Bevorzugt einzusetzende cyclische, aliphatische Carbonate der Formel (III) und (IV) sind Trimethylenglykolcarbonat, Neopentylglykolcarbonat, 1,4-Butandiolcarbonat, das dimere Carbonat des Pentandiols und das dimere Carbonat des Hexandiols.

Besonders bevorzugt einzusetzendes cyclisches aliphatisches Carbonat der Formel (III) ist Neopentylglykolcarbonat.

Bevorzugt einzusetzende cyclische aliphatische Ester der Formel (V) sind Pivalolacton und $\epsilon$-Caprolacton. Besonders bevorzugt ist $\epsilon$-Caprolacton.

Die Herstellung der cyclischen aromatischen Carbonatoligomeren der Formel (VI) ist beispielsweise in EP-A 0 162 379, EP-A 0 224 131, DE-OS 2 937 332, DE-OS 3 717 626, US-PS 3 274 214, US-PS 3 422 119, US-PS 3 155 683, DE-AS 1 229 101 beschrieben.

Die mittleren Molekulargewichte (Gewichtsmittl $\overline{M}_w$) der Blöcke A und C in der idealisierten Formel (I) können gleich oder verschieden sein. Die mittleren Molekulargewichte $\overline{M}_w$ für A liegen zwischen 2.000 und 500.000 g/mol, vorzugsweise zwischen 5.000 und 250.000 g/mol, für C zwischen 2.000 und 500.000 g/mol, vorzugsweise zwischen 5.000 bis 250.000 g/mol. (Die Blöcke A können dabei entweder ein Polymer $A_1$ oder ein Polymer $A_2$ oder eine Kombination beider Polymeren, d.h. ein Blockcopolymer $A_3$ sein.

Die Polymerisate enthalten die Blöcke A und C, jeweils in Mengen von 5 bis 95 Gew.-% (bezogen auf Gesamtmenge A + C), vorzugsweise in Mengen von 10 bis 90 Gew.-% (bezogen auf Gesamtmenge A + C).

Der Block $A_3$ im Copolymerisat der Formel (I) ist ein Copolymeres aus einem cyclischen aliphatischen Carbonat der Formel (III) und/oder (IV) und einem cyclischen, aliphatischen Ester der Formel (V). Er weist selbst einen sequenzartigen Aufbau auf gemäß der idealisierten Formel (VIII)

$(A_1\text{-}X\text{-}A_2)_y$ (VIII).

$A_1$ in Formel (VIII) ist ein Polymerisat eines cyclischen aliphatischen Carbonats der Formel (III) und/oder (IV).

$A_2$ in Formel (VIII) ist ein Polymerisat eines cyclischen aliphatischen Esters der Formel (V).

y in Formel (VIII) ist eine ganze Zahl von 1 bis 10, bevorzugt 1 bis 5, besonders bevorzugt 1.

X in Formel (VIII) ist ein Polymerisat, das sowohl die cyclischen aliphatischen Carbonate (III) und/oder (IV) als auch die cyclischen aliphatischen Ester (V) in polymerisierter Form enthält, wobei die Konzentration der polymerisierten aliphatischen Carbonate (III) und/oder (IV) jeweils in Richtung auf den Block $A_2$ und die Konzentration der polymerisierten Ester (V), jeweils in Richtung auf den Block $A_1$ kontinuierlich abnimmt ("tapered structure").

Die mittleren Molekulargewichte (Gewichtsmittel $\overline{M}_w$) der Blöcke $A_1$ und $A_2$ in den Formel (VIII) können gleich oder verschieden sein. Die mittleren Molekulargewichte $\overline{M}_w$ für $A_1$ liegen zwischen 1900 und 475.000 g/mol, vorzugsweise zwischen 4.500 und 225.000, für $A_2$ zwischen 1.900 und 475.000 g/mol, vorzugsweise zwischen 4.500 und 225.000 g/mol.

Weiterer Gegenstand der Erfindung ist ein Verfahren zur Herstellung von Blockcopolymerisaten der idealisierten Formel (I)

A - C (I)

in dem man in einer ersten Stufe ein cyclisches aliphatisches Carbonat der Formel (III) und/oder (IV) oder einen cyclischen aliphatischen Ester der Formel (V) oder ein cyclisches aliphatisches Carbonat und einen cyclischen aliphatischen Ester gleichzeitig in einem aprotischen organischen Lösungsmittel mit einer Alkylalkalimetall- oder Arylalkalimetallverbindung bei Temperaturen von +50° C bis -78° C, vorzugsweise +20° C bis -30° C bei einem Monomer/Lösungsmittel-Gewichtsverhältnis von 5 bis 35:100, vorzugsweise 10 bis 25:100 polymerisiert, der polymerisationsaktiven Lösung in einer zweiten Stufe eine Lösung von cyclischen aromatischen Carbonatoligomeren der Formel VI in einem aprotischen organischen Lösungsmittel zusetzt, wobei das Oligomer/Lösungsmittel-Gewichtsverhältnis im Bereich von 5 bis 35:100, vorzugsweise 8 bis 25:100 liegt, bei -20° C bis +80° C, vorzugsweise 0° C bis +60° C, weiter polymerisiert und dann die polymerisationsaktiven Zentren desaktiviert.

Die erste Stufe der Polymerisation ist an sich bekannt (vgl. DE-OS 3 607 625).

Die Herstellung der Blockcopolymerisate $A_3$ wird im folgenden an Beispielen erläutert:

1. Zum Aufbau eines Blocks $A_3$ mit der Struktur $(A_1\text{-}X\text{-}A_2)_y$ polymerisiert man ein Gemisch aus einem cyclischen aliphatischen Carbonat der Formel (III) und/oder (IV) und einem cyclischen aliphatischen Ester der Formel (V) in einem aprotischen organischen Lösungsmittel mittels Alkylalkalimetall- oder Arylalkalimetallverbindungen, wobei zuerst der Block $A_1$ und dann das "getaperte" Übergangssegment X und dann der Block $A_2$ aufgebaut wird. Das Polymer weist die Struktur $(A_1\text{-}X\text{-}A_2)$ auf und ist polymerisationsaktiv. (Die anschließende Zugabe einer Lösung von cyclischen aromatischen Carbonatoligomeren (IV) führt zum Aufbau des C-Blockes, d.h., es wird ein Copolymer der idealisierten Struktur $(A_1\text{-}X\text{-}A_2)\text{-}C$ erhalten.)

2. Wird ein Copolymerisat der Struktur $A_1\text{-}X\text{-}A_2\text{-}A_1\text{-}X\text{-}A_2$ gewünscht, so wird ein weiteres Gemisch aus einem cyclischen aliphatischen Carbonat der Formel (III) und/oder (IV) und einem cyclischen aliphatischen Ester in einem aprotischen organischen Lösungsmittel zu einer polymerisationsaktiven Lösung des Copolymersats $(A_1\text{-}X\text{-}A_2)$ gegeben und polymerisiert. Der B-Block weist nun die Struktur $A_1\text{-}X\text{-}A_2\text{-}A_1\text{-}X\text{-}A_2$ auf und ist weiterhin polymerisationsaktiv. (Die anschließende Zugabe einer Lösung von cyclischen aromatischen Carbonatoligomeren (IV) führt zum Aufbau des C-Blocks, d.h. es wird ein Copolymerisat der idealisierten Struktur $A_1\text{-}X\text{-}A_2\text{-}A_1\text{-}X\text{-}A_2\text{-}C$ erhalten.)

Entsprechend kann man Blöcke $(A_1\text{-}X\text{-}A_2)_y$ mit $y > 2$ aufbauen.

Die Copolymerisation von cyclischen aliphatischen Carbonaten und Estern zum Aufbau des $A_3$-Blocks in Formel (I) erfolgt bei Temperaturen von +50° C bis -78° C, vorzugsweise bei +20° C bis -30° C. Das Monomer Lösungsmittel-Gewichtsverhältnis liegt im Bereich von 5 bis 35:100, vorzugsweise 10 bis 25:100. Die anschließende Polymerisation der cyclischen aromatischen Carbonatoligomeren wird bei -20 bis +80° C, vorzugsweise bei 0 bis +60° C, durchgeführt. Das Oligomer/Lösungsmittel-Gewichtsverhältnis beträgt 5 bis 35:100, vorzugsweise 8 bis 25:100. Nach erfolgter Polymerisation werden die polymerisationsaktiven Zentren desaktiviert.

Die erste Stufe der Polymerisation zum Aufbau von Copolymeren der Formel $A_3$ ist ebenfalls

grundsätzlich bekannt (vgl. DE-OS 3 700 193).

Die Copolymerisation von cyclischen aliphatischen Carbonaten der Formeln (III) und/oder (IV) und/oder cyclischen aliphatischen Estern der Formel (V) mit cyclischen aromatischen Carbonatoligomeren der Formel (VI) wird als "lebende" anionische Polymerisation in Gegenwart von aprotischen, organischen Lösungsmitteln unter Verwendung von alkalimetallorganischen Verbindungen als Initiatoren und unter inerter Atmosphäre (Luft- und Feuchtigkeitsausschluß) durchgeführt.

Initiatoren sind Arylalkalimetall- und Alkylalkalimetallverbindungen sowie Alkoholate der Alkalimetalle. Bevorzugte Initiatoren sind:
n-Butyllithium, s-Butyllithium, Naphthalinkalium, Naphthalinnatrium, Kaliumphenolat, Kalium-tert.-butylat. Besonders bevorzugt sind n-Butyl und s-Butyllithium.

Als aprotische organische Lösungsmittel finden cyclische Ether oder aromatische oder aliphatische Kohlenwasserstoffe oder Mischungen aus cyclischen Ethern und aromatischen oder aliphatischen Kohlenwasserstoffen Verwendung. Bevorzugte Lösungsmittel sind Tetrahydrofuran, Tetrahydropyran, Dioxan und Toluol.

Besonders bevorzugt sind Tetrahydrofuran und Mischungen aus Tetrahydrofuran und Toluol.

Nach erfolgter Polymerisation werden die polymerisationsaktiven Zentren desaktiviert. Als Desaktivatoren werden protische Verbindungen, wie z.B. Wasser, Alkohole, Säuren oder Mischungen daraus eingesetzt. Bevorzugte Desaktivatoren sind Mischungen aus Methanol/Salzsäure und Methanol/Phosphorsäure.

Die Copolymerisate lassen sich nach bekannten Verfahren isolieren, z.B. durch Ausfällen mit Alkoholen, Filtrieren und anschließende Trocknung oder durch direktes Eindampfen der Copolymerlösung mittels Ausdampfaggregaten, wie Schneckenextrudern oder Dünnschichtverdampfern.

Die Copolymerisate lassen sich in bekannter Weise stabilisieren, pigmentieren und mittels üblicher Additive antistatisch und/oder flammfest ausrüsten oder mit Füllstoffen füllen.

Die Verarbeitung der Copolymerisate richtet sich nach ihren Eigenschaften. So können z.B. aus Copolymerisaten mit thermoplastischen Eigenschaften über bekannte Thermoplastverarbeitungsverfahren Formkörper hergestellt werden.

Die Copolymerisate eignen sich je nach ihrem chemischen Aufbau - zur Herstellung von Folien, Dichtungen, Beschichtungen oder von thermoplastischen Verpackungen.

## Beispiele

1. Herstellung der cyclischen Bisphenol A-Carbonatoligomeren

Unter Stickstoff werden 2,4 g (0,0024 mol) Triethylamin, 600 ml Methylenchlorid, 1800 ml Wasser und 36 ml 45 %ige Natronlauge (0,6 mol) vorgelegt. Hierzu ließ man bei langsamer Rührgeschwindigkeit (149 U/min) im Verlauf einer Stunde gleichzeitig eine Lösung von 9,72 g (0,096 mol) Triethylamin in 600 ml Methylenchlorid und eine Lösung von 84,8 g (0,24 mol) Bisphenol A-Bischlorkohlensäureester in 1200 ml Methylenchlorid bei Raumtemperatur zutropfen. Nach 10-minütigem Nachrühren wurde mit 3,6 %iger Salzsäure hydrolisiert und eine Phasentrennung durchgeführt. Die wäßrige Phase wurde mit Methylenchlorid gewaschen. Die organischen Phasen wurden vereinigt, mit Wasser gewaschen und das Rohprodukt durch Ausdampfung des Lösungsmittels isoliert (Ausbeute: 58,8 g (90 %)).

Die reinen cyclischen Bisphenol A-Carbonat-oligomeren wurden durch Extraktion des Rohproduktes mit Aceton gewonnen (Ausbeute: 23,5 g (40 %) bezogen auf Rohrprodukt).

Die HPLC-Analyse ergab folgende Cyclen-Verteilung:

| Anzahl der Bisphenol A-Carbonat-Einheiten im Cyclus | Menge (Gew.%) |
|---|---|
| 2 | 5 |
| 3 | 25 |
| 4 | 19 |
| 5 | 15 |
| 6 | 10 |
| 7 | 8 |
| 8 | 6 |
| 9 | 4 |
| >9 | 8 |

relative Viskosität: 1,04 ($CH_2Cl_2$, 20° C, 2 gew.-%ige Lösung)

2. Herstellung eines Blockcopolymerisats aus Polyneopentylglykolcarbonat und Bisphenol A-Polycarbonat in Tetrahydrofuran.

Zu einer Lösung von 5 g Neopentylglykolcarbonat in 35 ml Tetrahydrofuran wurden bei 15° C 0,5 ml sec.-Butyllithium (1,3 molare Lösung in Cyclohexan) unter Rühren und unter Stickstoff gegeben. Nach einer Reaktionszeit von 120 min bei dieser Temperatur wurden 8 ml Lösung entnommen und das Polymere in 50 ml Methanol/1-molare Phosphorsäure (99:1) gefällt. Das Polymere wurde isoliert und getrocknet.
Ausbeute: 1,1 g.
relative Viskosität: $\eta_{rel}$: 1,25 ($CH_2Cl_2$, 20° C, 2 gew.-%ige Lösung.
GPC-Analyse (Eichung für Polyneopentylglykolcarbonat):
Molekulargewicht: (bestimmt im Maximum der Elutionspeaks) = 18.000 g/mol

Nach Entnahme der Probe wurde dem Reaktionsgemisch eine Lösung von 5 g cyclischen Bisphenol A-Carbonatoligomeren in 30 ml Tetrahydrofuran zugesetzt. Die Reaktionszeit betrug bei 15° C 90 min. Das Reaktionsgemisch wurde dann in 400 ml Methanol/1-molare Phosphorsäure (99:1) gegossen. Das Copolymere wurde isoliert, mit Methanol neutral gewaschen und getrocknet.
Ausbeute: 8,4 g.
relative Viskosität $\eta_{rel}$: 1,48 ($CH_2Cl_2$, 20° C, 2 gew.-%ige Lösung).
GPC-Analyse (Eichung für Polyneopentylglykolcarbonat):
Molekulargewicht (bestimmt im Maximum des Elutionspeaks) = 34.000 g/mol
DSC-Analyse (2. Aufheizung mit 20° C/min):
Schmelztemperatur $T_m$ = 106° C
Glastemperatur Tg = 131° C.

3. Herstellung eines Blockcopolymerisats aus Polyneopentylglycolcarbonat und Bisphenol A-Polycarbonat in Toluol/Tetrahydrofuran.

Zu einer Lösung von 10 g Neopentylglycolcarbonat in 70 ml Toluol wurden bei 15° C 0,4 ml sec.-Butyllithium (1,3 molare Lösung in Cyclohexan) unter Rühren und unter Stickstoff gegeben. Nach einer Reaktionszeit von 60 min bei dieser Temperatur wurde das Gemisch zu einer Lösung von 10 g cyclischen Bisphenol A-Carbonatoligomeren in 75 ml Tetrahydrofuran gegeben. Die Reaktionszeit betrug bei 15° C 120 min. Das Reaktionsgemisch wurde dann in 400 ml Methanol/1-molare Phosphorsäure (99:1) gegossen. Das Copolymere wurde isoliert, mit Methanol neutral gewaschen und getrocknet.
Ausbeute: 15,5 g
relative Viskosität $\eta_{rel}$: 1,60 ($CH_2Cl_2$, 20° C, 2 gew.-%ige Lösung).

4. Herstellung eines Blockcopolymerisats aus Poly-$\epsilon$-Caprolacton und Bisphenol A-Polycarbonat in Tetrahydrofuran.

Zu einer Lösung von 5 g ε-Caprolacton in 35 ml Tetrahydrofuran wurden bei 15 °C 0,5 ml sec.-Butyllithium (1,3 molare Lösung in Cyclohexan) unter Rühren und unter Stickstoff gegeben. Nach einer Reaktionszeit von 120 min bei dieser Temperatur wurden 10 ml Lösung entnommen und das Polymere in 50 ml Methanol/1-molare Phosphorsäure (99:1) gefällt. Das Polymere wurde isoliert und getrocknet.
Ausbeute: 1,3 g
relative Viskosität $\eta_{rel}$: 1,39 ($CH_2Cl_2$, 20 °C, 2 gew.-%ige Lösung).
GPC-Analyse (Eichung für Poly-ε-Caprolacton)
Molekulargewicht (bestimmt im Maximum des Elutionspeaks) = 15.000 g/mol.

Nach Entnahme der Probe wurde dem Reaktionsgemisch eine Lösung von 5 g cyclischen Bisphenol A-Carbonatoligomeren in 30 ml Tetrahydrofuran zugesetzt. Die Reaktionszeit betrug bei 15 °C 90 min. Das Reaktionsgemisch wurde dann in 400 ml Methanol/1-molare Phosphorsäure (99:1) gegossen. Das Copolymere wurde isoliert, mit Methanol neutral gewaschen und getrocknet.
Ausbeute: 7,9 g
relative Viskosität $\eta_{rel}$: 1,65 ($CH_2Cl_2$, 20 °C, 2 gew.-%ige Lösung)
GPC-Analyse (Eichung für Poly-ε-Caprolacton): Molekulargewicht (bestimmt im Maximum des Elutionspeaks) = 29.000 g/mol
DSC-Analyse (2. Aufheizung mit 20 °C/min):
Schmelzpunkt $T_m$ = 50 °C
Glastemperatur
$Tg_1$ = -60 °C
$Tg_2$ = 86 °C.

5. Herstellung eines Blockcopolymerisats aus Poly-ε-caprolacton und Bisphenol A-Polycarbonat in Toluol/Tetrahydrofuran.

Zu einer Lösung von 10 g ε-Caprolacton in 70 ml Toluol wurden bei 15 °C 0,5 ml sec.-Butyllithium (1,3 molare Lösung in Cyclohexan) unter Rühren und unter Stickstoff gegeben. Nach einer Reaktionszeit von 60 min bei dieser Temperatur wurde das Gemisch zu einer Lösung von 10 g cyclischen Bisphenol A-Carbonatoligomeren in 75 ml Tetrahydrofuran gegeben. Die Reaktionszeit betrug bei 15 °C 120 min. Das Reaktionsgemisch wurde dann in 400 ml Methanol/1-molare Phosphorsäure (99:1) gegossen. Das Copolymere wurde isoliert, mit Methanol neutral gewaschen und getrocknet.
Ausbeute: 18,5 g
relative Viskosität $\eta_{rel}$: 1,43 ($CH_2Cl_2$, 20 °C, 2 gew.-%ige Lösung).

6. Herstellung eines Blockcopolymerisats aus Poly(neopentylglykolcarbonat-tap-ε-caprolacton) und Bisphenol A-Polycarbonat in Tetrahydrofuran.

Zu einer Lösung von 2,5 g Neopentylglykolcarbonat und 2,5 g ε-Caprolacton in 35 ml Tetrahydrofuran wurden bei 15 °C 0,5 ml sec.-Butyllithium (1,3-molare Lösung in Cyclohexan) unter Rühren und unter Stickstoff gegeben. Nach einer Reaktionszeit von 60 min bei dieser Temperatur wurden 10 ml Lösung entnommen und das Polymere in 50 ml Methanol/1-molare Phosphorsäure (99:1) gefällt. Das Polymere wurde isoliert und getrocknet.
Ausbeute: 1,3 g
relative Viskosität $\eta_{rel}$: 1,52 ($CH_2Cl_2$, 20 °C, 2 gew.-%ige Lösung)

Nach Entnahme der Probe wurde dem Reaktionsgemisch eine Lösung von 5 g cyclischen Bisphenol A-Carbonatoligomeren in 35 ml Tetrahydrofuran zugesetzt. Die Reaktionszeit betrug bei 15 °C 150 min.

Das Reaktionsgemisch wurde dann in 400 ml Methanol/1-molare Phosphorsäure gegossen. Das Copolymere wurde isoliert, mit Methanol neutral gewaschen und getrocknet.
Ausbeute: 8,45 g
relative Viskosität $\eta_{rel}$: 1,62 ($CH_2Cl_2$, 20 °C, 2 gew.-%ige Lösung)
DSC-Analyse (2. Aufheizung mit 20 °C/min):
Glastemperaturen
$Tg_1$ = -24 °C
$Tg_2$ = 97 °C.

7. Herstellung eines Blockcopolymerisats aus Poly(neopentylglycolcarbonat-tap-ε-caprolacton und Bisphenol A-Polycarbonat in Toluol/Tetrahydrofuran.

Zu einer Lösung von 5 g ε-Caprolacton und 5 g Neopentylglycolcarbonat in 70 ml Toluol wurden bei 15 °C 0,5 ml sec.-Butyllithium (1,3 molare Lösung in Cyclohexan) unter Rühren und unter Stickstoff gegeben. Nach einer Reaktionszeit von 60 min bei dieser Temperatur wurde das Gemisch zu einer Lösung von 10 g cyclischen Bisphenol A-Carbonatoligomeren in 75 ml Tetrahydrofuran gegeben. Die Reaktionszeit betrug bei 15 °C 120 min. Das Reaktionsgemisch wurde dann in 400 ml Methanol/1-molare Phosphorsäure (99:1) gegossen. Das Copolymere wurde isoliert, mit Methanol neutral gewaschen und getrocknet.
Ausbeute: 16,1 g
relative Viskosität $\eta_{rel}$: 1,44 ($CH_2Cl_2$, 20 °C, 2 gew.-%ige Lösung).

## Ansprüche

1. Copolymere aus Blöcken von Polymeren cyclischer aliphatischer Carbonate, cyclischer aliphatischer Ester oder cyclischer aliphatischer Carbonate und cyclischer aliphatischer Ester einerseits und Blöcken von Polymeren cyclischer aromatischer Carbonate andererseits.

2. Blockcopolymere aus einem Block des Polymeren von Neopentylglykolcarbonat und einem Block des Polymeren von cyclischen Bisphenol A Carbonatoligomeren.

3. Blockcopolymer aus einem ebenfalls blockartig aufgebauten Polymeren von Neopentylglykolcarbonat und ε-Caprolacton und einem Block aus dem Polymeren von cyclischen Bisphenol A Carbonatoligomeren.

4. Verfahren zur Herstellung der Copolymeren gemäß Anspruch 1, dadurch gekennzeichnet, daß man in einer ersten Stufe ein cyclisches aliphatisches Carbonat und/oder einen cyclischen aliphatischen Ester in einem aprotischen organischen Lösungsmittel mit einer Alkylalkalimetall oder Arylalkalimetall-Verbindung polymerisiert, der polymerisationsaktiven Lösung in einer zweiten Stufe eine Lösung von cyclischen aromatischen Carbonatoligomeren in einem aprotischen organischen Lösungsmittel zusetzt, weiter polymerisiert und anschließend die polymerisationsaktiven Zentren desaktiviert.